# EUROPÄISCHE PATENTSCHRIFT

(11) **EP 1 522 482 B1**
(45) Veröffentlichungstag und Bekanntmachung des Hinweises auf die Patenterteilung: **15.12.2010**
(21) Anmeldenummer: 04024032.7
(22) Anmeldetag: 08.10.2004
(51) Int. Cl.: B62B 3/02

(54) **Transportwagen**
Transport trolley
Chariot de transport

(30) Priorität: 11.10.2003 DE 10347408
(43) Veröffentlichungstag der Anmeldung: 13.04.2005
(73) Patentinhaber: BLANCO CS GmbH + Co KG, 75038 Oberderdingen (DE)
(72) Erfinder: Böss, Ralf, 76703 Kraichtal (DE)
(74) Vertreter: Hoeger, Stellrecht & Partner Patentanwälte

(56) Entgegenhaltungen:
- EP-A- 1 245 470
- CH-A- 430 097
- FR-A1- 2 723 559
- FR-A1- 2 795 461
- IT-B- 1 185 921
- US-A- 2 220 150
- US-A- 5 125 520

## Beschreibung

Die vorliegende Erfindung betrifft einen Transportwagen, insbesondere einen Servierwagen, der einen ersten Bügel und einen zweiten Bügel und mindestens ein Bord, durch welches die beiden Bügel miteinander verbunden sind, umfasst.

Ein solcher gattungsgemäßer Transportwagen ist beispielsweise aus der DE 101 15 886 A1 bekannt.

Bei dem aus der DE 101 15 886 A1 bekannten Transportwagen sind die beiden Bügel mit den Ecken der im wesentlichen rechteckigen Borde verschweißt. Dies führt dazu, dass für die Montage dieses Transportwagens eine Schweißvorrichtung erforderlich ist. Ferner muss bei der Montage des Transportwagens sehr präzise gearbeitet werden, um sicher zu stellen, dass die Bügel korrekt relativ zu den Borden positioniert und ausgerichtet sind.

Die FR 2 795 461 A1 offenbart einen Transportwagen gemäß dem Oberbegriff von Anspruch 1.

Der vorliegenden Erfindung liegt die Aufgabe zugrunde, einen Transportwagen der eingangs genannten Art zu schaffen, welcher einfach und rasch zu montieren ist und dennoch eine hohe mechanische Stabilität aufweist.

Diese Aufgabe wird durch einen Transportwagen nach Anspruch 1 gelöst.

Dadurch, daß bei dem erfindungsgemäßen Transportwagen die Bügel sich durch jeweils mindestens eine Aufnahme an mindestens einem der Borde hindurch erstrecken, ist es besonders einfach, die Bügel des Transportwagens bei dessen Montage relativ zu dem Bord und damit relativ zueinander zu positionieren.

Dadurch, daß sich die Bügel durch die jeweiligen Aufnahmen hindurch erstrecken, ist dabei eine hohe mechanische Stabilität des Transportwagens gewährleistet.

Bei einer bevorzugten Ausgestaltung des erfindungsgemäßen Transportwagens ist vorgesehen, daß mindestens eine der Aufnahmen an dem Bord eine Hülse umfaßt, die einen Aufnahmekanal für einen der Bügel ringförmig umgibt.

Alternativ oder ergänzend hierzu kann vorgesehen sein, daß mindestens eine der Aufnahmen an dem Bord ein Aufnahmerohr umfaßt.

Ein besonders guter Kontakt zwischen dem Bügel einerseits und dem Bord mit der Aufnahme andererseits ergibt sich, wenn vorteilhafterweise vorgesehen ist, daß die Innenkontur mindestens einer der Aufnahmen der Außenkontur des sich im montierten Zustand des Transportwagens durch die Aufnahme hindurch erstreckenden Bereichs des Bügels entspricht.

Insbesondere kann vorgesehen sein, daß die Aufnahme eine zylindrische Innenkontur und der sich durch die Aufnahme hindurch erstreckende Bereich des Bügels eine zylindrische Außenkontur aufweist, wobei der Innendurchmesser der Aufnahme nur geringfügig größer ist als der Außendurchmesser des Bügels, so daß der sich durch die Aufnahme hindurch erstreckende Bügel gegen ein Verkippen relativ zu der Aufnahme gesichert ist.

Eine besonders gute Übertragung von Kräften zwischen den Bügeln und dem Bord des Transportwagens wird erreicht, wenn im montierten Zustand des Transportwagens mindestens einer der Bügel mit einem Bereich seiner Außenseite flächig an der Innenseite mindestens einer der Aufnahmen anliegt.

Die mechanische Stabilität des Transportwagens wird weiter erhöht, wenn mindestens ein Bord des Transportwagens mindestens zwei Aufnahmen für denselben Bügel aufweist.

Bei einer besonders stabilen und daher besonders bevorzugten Ausgestaltung der Erfindung ist vorgesehen, daß mindestens ein Bord des Transportwagens mindestens zwei Aufnahmen für den ersten Bügel und mindestens zwei Aufnahmen für den zweiten Bügel aufweist.

Um die Steifigkeit des Transportwagens weiter zu erhöhen, ist vorteilhafterweise vorgesehen, daß der Transportwagen mindestens zwei, vorzugsweise mindestens drei, Borde umfaßt.

Um den Transportwagen in einfacher Weise für einen Transport desselben zerlegen zu können, ist es günstig, wenn mindestens eine Aufnahme mindestens eines Bordes zur Montage des Transportwagens auf einen der Bügel aufschiebbar und zur Demontage des Transportwagens von dem Bügel abziehbar ist.

Besonders günstig ist es für eine einfache Zerlegbarkeit des Transportwagens, wenn sämtliche Aufnahmen aller Borde zur Montage des Transportwagens auf jeweils einen der Bügel aufschiebbar und zur Demontage des Transportwagens von dem Bügel abziehbar sind.

Insbesondere kann vorgesehen sein, daß die Aufnahmen für die Borde lediglich durch Formschluß an den Bügeln gehalten sind, nicht jedoch in anderer Weise, insbesondere nicht durch Verschweißen und/oder Verkleben, an den Bügeln festgelegt sind.

Um in einfacher Weise den gewünschten Abstand zwischen verschiedenen Borden des erfindungsgemäßen Transportwagens einstellen zu können, kann vorgesehen sein, daß zwischen mindestens einer Aufnahme eines ersten Bords für einen der Bügel und mindestens einer Aufnahme eines zweiten Bords für denselben Bügel mindestens ein Distanzelement angeordnet ist, durch welches sich der betreffende Bügel hindurch erstreckt.

Ein solches Distanzelement kann insbesondere eine Distanzhülse oder ein Distanzrohr umfassen.

Vorzugsweise ist dabei vorgesehen, daß die Aufnahme des ersten Bords und die Aufnahme des zweiten Bords an einander gegenüberliegenden Enden des Distanzelements anliegen.

Um das erste Bord und das zweite Bord in mechanisch stabiler Weise auf dem gewünschten Abstand voneinander zu halten, ist es besonders günstig, wenn zwischen sämtlichen Aufnahmen für Bügel des ersten Bords und sämtlichen Aufnahmen für Bügel des zweiten Bords jeweils mindestens ein Distanzelement angeordnet ist.

Um auch bei Verwendung von Distanzelementen eine einfache Zerlegbarkeit des Transportwagens zu gewährleisten, ist vorteilhafterweise vorgesehen, daß mindestens eines der Distanzelemente zur Montage des Transportwagens auf einen der Bügel aufschiebbar und zur Demontage des Transportwagens von dem Bügel abziehbar ist.

Besonders günstig ist es, wenn sämtliche Distanzelemente zur Montage des Transportwagens auf jeweils einen der Bügel aufschiebbar und zur Demontage des Transportwagens von dem betreffenden Bügel abziehbar sind.

Um Tragrollen an dem Transportwagen anordnen zu können, ohne daß hierfür ein gesondertes Chassis erforderlich ist, ist bei einer bevorzugten Ausgestaltung des erfindungsgemäßen Transportwagens vorgesehen, daß mindestens einer der Bügel an einem unteren Ende mit einer Tragrolle verbunden ist.

Insbesondere kann vorgesehen sein, daß die Tragrolle ein Halteelement, beispielsweise einen Haltezapfen oder eine Haltehülse, umfaßt, das sich in den Bügel hinein erstreckt und/oder auf den Bügel aufgeschoben ist.

Um die Tragrolle fest mit dem Bügel zu verbinden, kann vorteilhafterweise vorgesehen sein, daß das Halteelement der Tragrolle an dem Bügel mittels eines Befestigungsmittels, vorzugsweise mittels einer Befestigungsschraube, gesichert ist.

Ganz allgemein kann vorgesehen sein, daß dann, wenn mindestens eine Aufnahme eines Bordes und/oder mindestens ein Distanzelement auf den Stützabschnitt eines Bügels aufgeschoben sind, dieses Element beziehungsweise diese Elemente an dem Bügel dadurch gesichert werden, dass das dem freien Ende des Stützabschnitts nächstliegende dieser Elemente mittels eines Befestigungsmittels, beispielsweise mittels einer Befestigungsschraube, lösbar an dem Bügel, insbesondere an dem Stützabschnitt des Bügels, festgelegt ist.

Bei einer bevorzugten Ausgestaltung des erfindungsgemäßen Transportwagens ist vorgesehen, daß mindestens einer der Bügel im Wesentlichen U-förmig ausgebildet ist.

Ferner umfasst mindestens einer der Bügel zwei Stützabschnitte, die sich jeweils durch mindestens eine Aufnahme mindestens eines Bordes hindurch erstrecken, und einen Griffabschnitt, der die beiden Stützabschnitte miteinander verbindet.

Der Griffabschnitt weist an seinen Endbereichen einen größeren Außendurchmesser auf als die Stützabschnitte an ihren dem Griffabschnitt zugewandten Endbereichen.

Der Außendurchmesser des Griffabschnitts in seinen Endbereichen entspricht im Wesentlichen dem Außendurchmesser einer Aufnahme an einem der Borde des Transportwagens.

Der Griffabschnitt und die beiden Stützabschnitte des Bügels können einstückig miteinander ausgebildet sein.

Alternativ hierzu kann auch vorgesehen sein, daß der Griffabschnitt und die beiden Stützabschnitte miteinander verschweißt und/oder verklebt sind.

Eine besonders einfache Zerlegbarkeit des erfindungsgemäßen Transportwagens kann dadurch erreicht werden, daß die beiden Bügel des Transportwagens ausschließlich durch das Bord beziehungsweise, im Fall mehrerer Borde, ausschließlich durch die Borde miteinander verbunden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung eines Servierwagens;
- Fig. 2: eine schematische Seitenansicht des Servierwagens aus Fig. 1;
- Fig. 3: eine schematische Vorderansicht des Servierwagens aus den Fig. 1 und 2;
- Fig. 4: eine schematische Draufsicht von oben auf den Servierwagen aus den Fig. 1 bis 3;
- Fig. 5: eine schematische Draufsicht von unten auf den Servierwagen aus den Fig. 1 bis 4;
- Fig. 6: eine schematische Explosionsdarstellung des Servierwagens aus den Fig. 1 bis 5;
- Fig. 7: einen schematischen Schnitt durch einen Bügel des Servierwagens, der sich durch eine Bügelaufnahme an einem Bord hindurch erstreckt; und
- Fig. 8: einen schematischen Schnitt durch ein unteres Ende eines Bügels des Servierwagens, in welches ein Haltezapfen einer Tragrolle eingesteckt ist.

Gleiche oder funktional äquivalente Elemente sind in allen Figuren mit den selben Bezugszeichen bezeichnet.

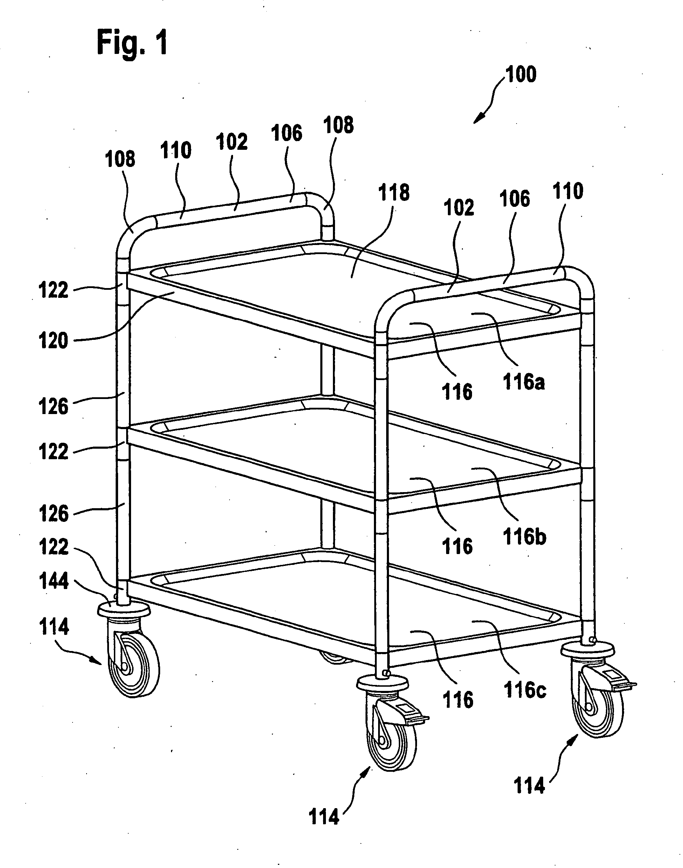

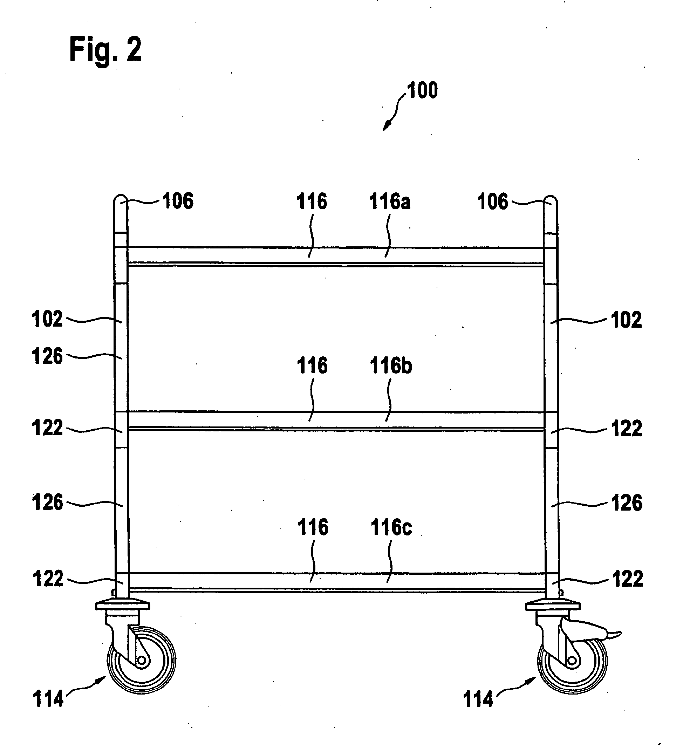

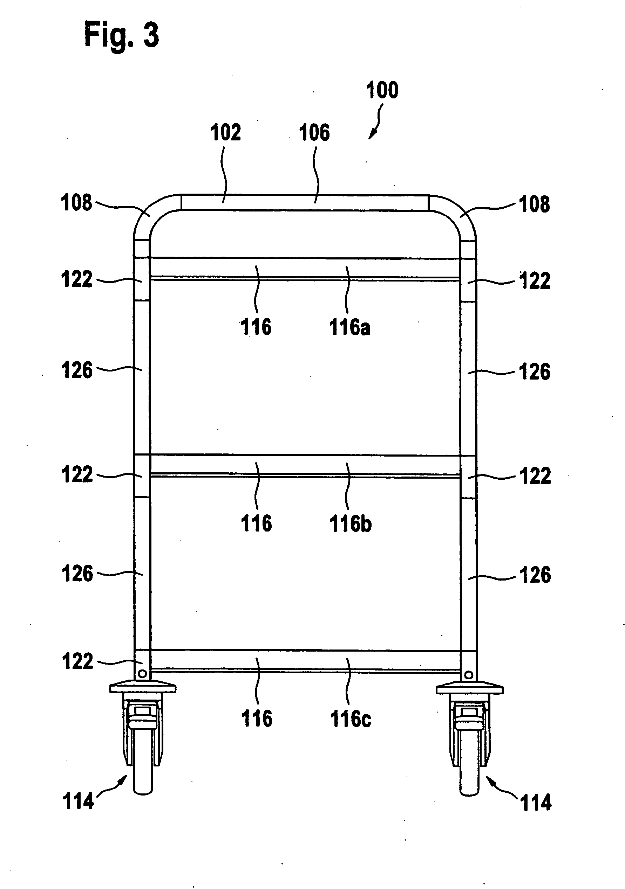

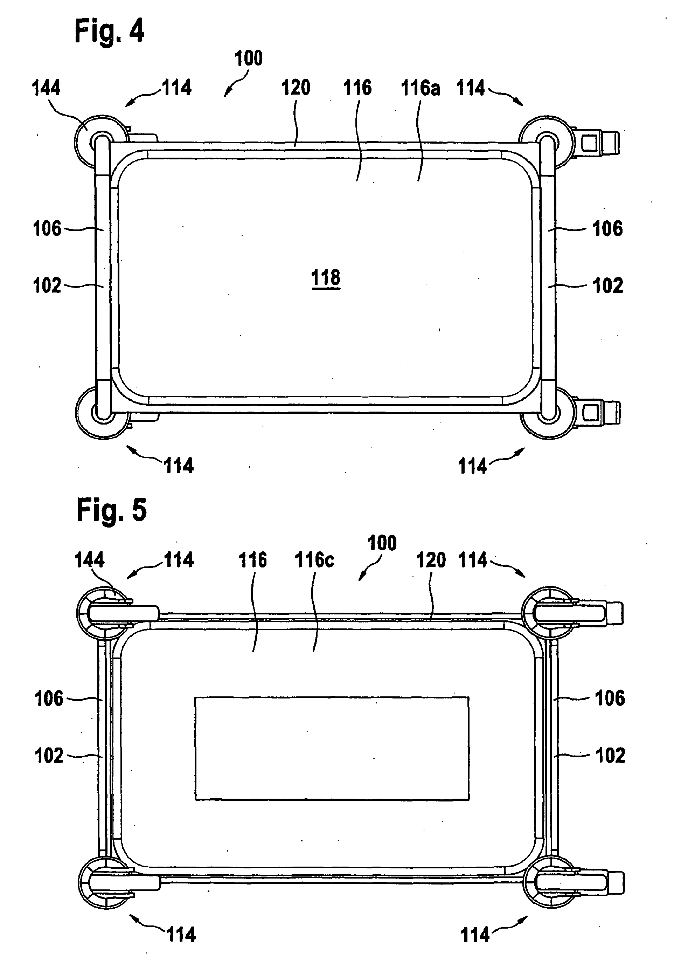

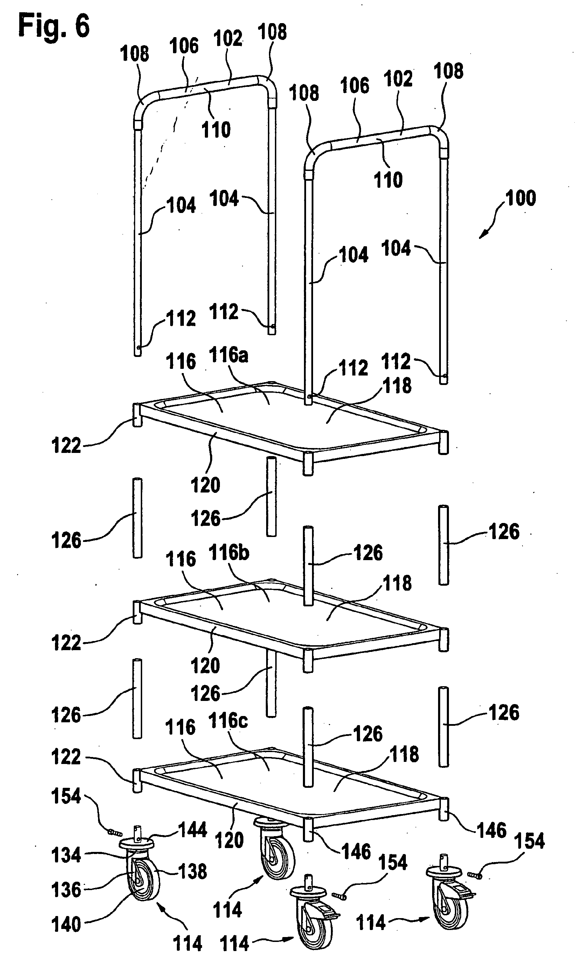

Ein in den Fig. 1 bis 8 dargestellter und als Ganzes mit 100 bezeichneter Servierwagen umfaßt zwei Bügel 102, die beide im wesentlichen die Form eines umgedrehten U aufweisen (siehe insbesondere Fig. 6).

Jeder der Bügel 102 umfaßt zwei Stützabschnitte 104, welche als im wesentlichen gerade, hohlzylindrische Rohre mit dem Außendurchmesser d ausgebildet sind und die beiden Schenkel des U bilden.

Die oberen Enden der beiden Stützabschnitte 104 jeden Bügels 102 sind durch einen Griffabschnitt 106 miteinander verbunden, welcher seinerseits zwei gekrümmte Abschnitte 108 und einen die gekrümmten Abschnitte 108 miteinander verbindenden, im montierten Zustand des Servierwagens 100 horizontal ausgerichteten Mittelabschnitt 110 umfaßt.

Jeder Griffabschnitt 106 ist als ein hohlzylindrisches Rohr mit dem Außendurchmesser D ausgebildet.

Der Griffabschnitt 106 und die Stützabschnitte 104 jeden Bügels 102 können einstückig miteinander ausgebildet sein.

Alternativ hierzu ist es aber auch möglich, daß die Stützabschnitte 104 mit ihren oberen Enden in jeweils ein offenes Ende des Griffabschnitts 106 eingesetzt und in dieser Stellung, beispielsweise durch Verschweißung und/oder Verklebung, an dem Griffabschnitt 106 festgelegt sind.

Nahe ihres unteren Endes sind die Stützabschnitte 104 der Bügel 102 mit jeweils zwei einander radial gegenüberliegenden Durchtrittsöffnungen 112 versehen, die zur Festlegung von Tragrollen 114 an den Bügeln 102 dienen, wie im folgenden noch näher erläutert werden wird.

Im montierten Zustand des Servierwagens 100 sind die beiden Bügel 102 durch mehrere, beispielsweise drei, Auflageborde 116 miteinander verbunden, welche zur Aufnahme der mittels des Servierwagens 100 zu transportierenden Gegenstände, beispielsweise Speisenbehälter und/oder Serviertabletts dienen und zu diesem Zweck jeweils eine im wesentlichen horizontal ausgerichtete Auflagefläche 118 aufweisen, die von einem um die Auflagefläche 118 umlaufenden, im wesentlichen rechteckigen Bordrand 120 umgeben ist.

An jede der vier Ecken eines Auflagebords 116 ist jeweils eine im wesentlichen hohlzylindrisch ausgebildete Aufnahmehülse 122 angeschweißt, deren obere Stirnseite im wesentlichen mit der Oberseite 124 des Bordrandes 120 bündig ist und sich von dem Bordrand 120 aus in (im montierten Zustand des Servierwagens 100) vertikaler Richtung nach unten erstreckt.

Der Außendurchmesser der Aufnahmehülsen 122 entspricht dem Außendurchmesser D der Griffabschnitte 106 der Bügel 102.

Der Innendurchmesser der Aufnahmehülsen 122 ist geringfügig größer als der Außendurchmesser d der Stützabschnitte 104 der Bügel 102, so daß jedes der Auflageborde 116 mit seinen jeweils vier Aufnahmehülsen 122 auf die vier Stützabschnitte 104 der beiden Bügel 102 so aufgeschoben werden kann, daß sich durch jede Aufnahmehülse 122 des betreffenden Auflagebords 116 jeweils einer der Stützabschnitte 104 hindurch erstreckt.

Dabei liegt die Innenseite jeder Aufnahmehülse 122 jeweils flächig an der Außenseite des jeweiligen Stützabschnitts 104 an, so daß sich die Aufnahmehülse 122 und der betreffende Stützabschnitt 104 nur in axialer Richtung relativ zueinander bewegen können, eine Bewegung in radialer Richtung und/oder ein Verkippen des Stützabschnitts 104 relativ zu der Aufnahmehülse 122 jedoch ausgeschlossen sind.

Um die Auflageborde 116 des Servierwagens 100 im gewünschten vertikalen Abstand voneinander zu halten, umfaßt der Servierwagen 100 ferner Distanzelemente 126 in Form von geraden, hohlzylindrischen Distanzrohren mit dem Außendurchmesser D und mit demselben Innendurchmesser wie die Aufnahmehülsen 122, welcher den Außendurchmesser d der Stützabschnitte 104 der Bügel 102 nur geringfügig übertrifft, so daß die Distanzelemente 126 auf jeweils einen der Stützabschnitte 104 aufgeschoben werden können.

Wie am besten aus den Fig. 1 und 6 zu ersehen ist, ist jeweils ein Distanzelement 126 zwischen jeweils einer Aufnahmehülse 122 eines über einem anderen Auflagebord 116b angeordneten Auflagebords 116a und jeweils einer Aufnahmehülse 122 des darunter liegenden Auflagebords 116b angeordnet.

Da alle, beispielsweise vier, zwischen zwei übereinander angeordneten Auflageborden 116a, 116b angeordneten Distanzelemente 126 dieselbe Höhe, das heißt dieselbe axiale Ausdehnung, aufweisen, weisen alle Aufnahmehülsen 122 eines oben liegenden Auflageboards 116a denselben Abstand von den Aufnahmehülsen 122 des darunter liegenden Auflageboards 116b auf, so daß die Auflageborde 116 alle parallel zueinander ausgerichtet sind.

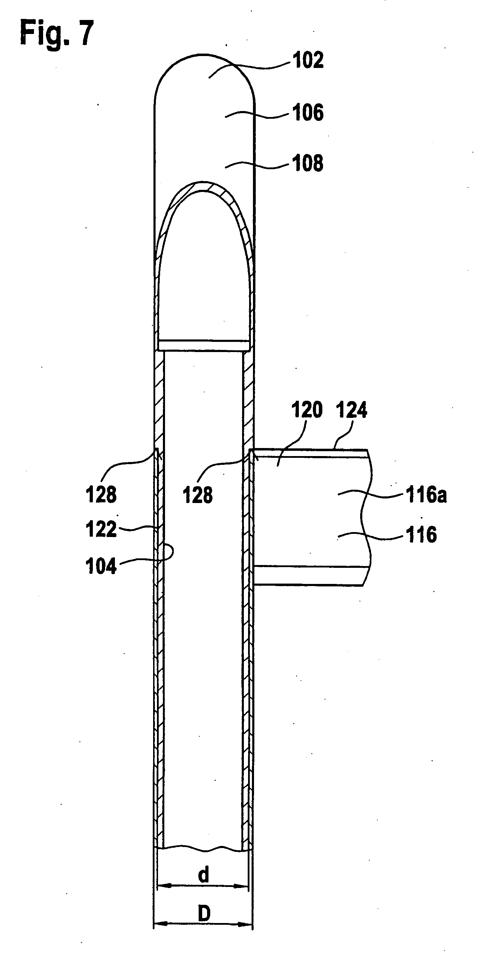

Wie am besten aus Fig. 7 zu ersehen ist, sind oberhalb der Aufnahmehülsen 122 des obersten Auflageboards 116a keine Distanzelemente 126 angeordnet; vielmehr liegen an den oberen Stirnseiten der Aufnahmehülsen 122 des obersten Auflageboards 116a die unteren Stirnflächen 128 jeweils eines Griffabschnitts 106 eines Bügels 102 an.

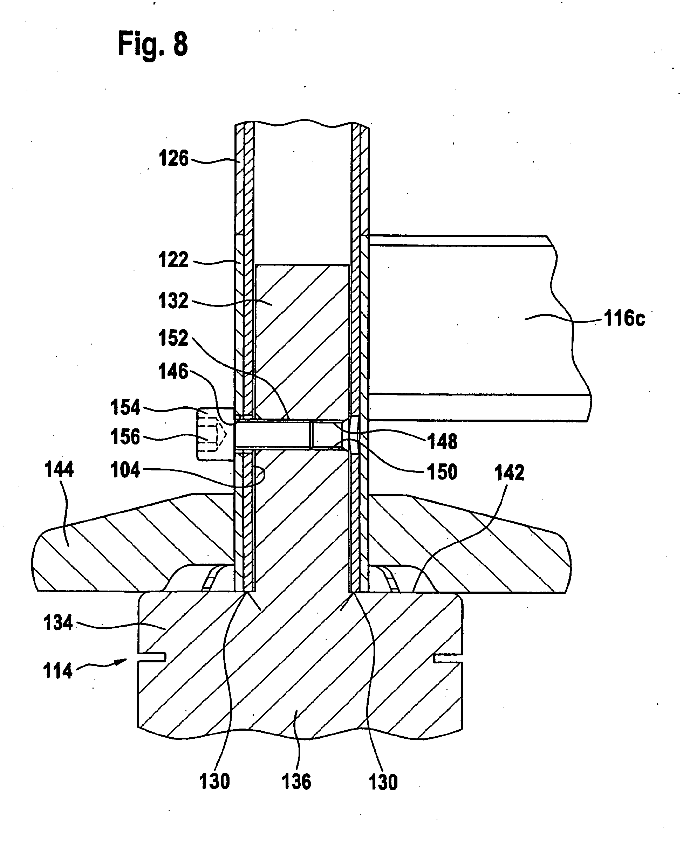

Auch unterhalb der Aufnahmehülsen 122 des untersten Auflageboards 116c sind keine Distanzelemente 126 vorgesehen; vielmehr sind, wie am besten aus Fig. 8 zu ersehen ist, die unteren Stirnseiten der Aufnahmehülsen 122 des untersten Auflageboards 116c mit den unteren Stirnflächen 130 jeweils eines der Stützabschnitte 104 bündig.

In das untere Ende jedes Stützabschnitts 104 erstreckt sich ein Haltezapfen 132 hinein, welcher sich von einer im wesentlichen zylindrischen Halteplatte 134, deren Durchmesser den Durchmesser der Aufnahmehülse 122 übertrifft, aus nach oben erstreckt.

Die Halteplatte 134 ist über ein Drehgelenk so mit einem Lagerbock 136 verbunden, daß der Lagerbock 136 um eine vertikale Achse relativ zu der Halteplatte 134 drehbar ist.

In jedem Lagerbock 136 ist jeweils ein mit einer Bereifung 138 versehener Rollenkörper 140 um eine horizontale Achse drehbar gelagert.

Jeweils ein Rollenkörper 140 mit Bereifung 138, ein Lagerbock 136, eine Halteplatte 134 und ein Haltezapfen 132 bilden zusammen eine Tragrolle 114 des Servierwagens 100.

Wie am besten aus Fig. 8 zu ersehen ist, liegt die Oberseite 142 der Halteplatte 134 im montierten Zustand des Servierwagens 100 an der unteren Stirnfläche 130 des zugehörigen Stützabschnitts 104 an.

Die Halteplatte 134 trägt ferner einen um eine vertikale Achse rotationssymmetrischen Wandabweiser 144 mit einer mittigen Durchgangsöffnung, durch welche sich der Stützabschnitt 104 hindurch erstreckt.

Die Aufnahmehülse 122 des untersten Auflagebords 116 weist eine Durchtrittsöffnung 146 auf, welche im montierten Zustand des Servierwagens 100 mit einer der Durchtrittsöffnungen 112 im unteren Endbereich des zugeordneten Stützabschnitts 104 fluchtet.

Ferner weist der Haltezapfen 132 der Tragrolle 114 eine radiale Durchgangsbohrung 148 auf, welche im montierten Zustand des Servierwagens 100 mit den Durchtrittsöffnungen 146 und 112 in der Aufnahmehülse 122 beziehungsweise im Stützabschnitt 104 fluchtet.

Diese Durchgangsbohrung 148 ist mit einem Innengewinde 150 versehen, in welches ein Außengewinde 152 einer Befestigungsschraube 154 hineingedreht ist, deren Kopf 156 von außen an der Außenseite der Aufnahmehülse 122 anliegt.

Durch die Befestigungsschraube 154 sind sowohl die Tragrolle 114 als auch die Aufnahmehülse 122 gegen eine axiale Bewegung relativ zu dem zugeordneten Stützabschnitt 104 gesichert.

Da der Abstand zwischen der oberen Stirnseite der Aufnahmehülse 122 des untersten Auflagebords 116c einerseits und der unteren Stirnfläche 128 des Griffabschnitts 106 andererseits der Summe der Längen der dazwischen liegenden Aufnahmehülsen 122 und Distanzelemente 126 entspricht, sind durch die Befestigungsschraube 154 auch die weiteren, auf den betreffenden Stützabschnitt 104 aufgeschobenen Aufnahmehülsen 122 der Auflageborde 116 und Distanzelemente 126 gegen eine axiale Bewegung relativ zu dem Stützabschnitt 104 des Bügels 102 gesichert.

Zur Montage des vorstehend beschriebenen Servierwagens 100 wird wie folgt vorgegangen:

Zunächst wird das oberste Auflagebord 116a mit seinen Aufnahmehülsen 122 auf die vier Stützabschnitte 104 der Bügel 102 aufgeschoben, bis die Oberseiten seiner Aufnahmehülsen 122 an den unteren Stirnflächen 128 der Griffabschnitte 106 anliegen.

Dann wird auf jeden der Stützabschnitte 104 ein Distanzelement 126 aufgeschoben, bis dessen obere Stirnfläche an der unteren Stirnseite jeweils einer Aufnahmehülse 122 des obersten Auflagebords 116a anliegt.

Darauf werden abwechselnd Auflageborde 116 mit ihren Aufnahmehülsen 122 und Distanzelemente 126 auf die Stützabschnitte 104 aufgefädelt, bis die gewünschte Anzahl von Auflageborden 116 an den Stützabschnitten 104 angeordnet ist.

Die Aufnahmehülsen 122 des untersten Auflagebords 116c schließen an ihrer Unterseite bündig mit den unteren Stirnflächen 130 der Stützabschnitte 104 ab und sind mit den Durchtrittsöffnungen 146 versehen, welche mit den Durchtrittsöffnungen 112 im unteren Endbereich der Stützbereiche 104 fluchten.

Nun werden die Tragrollen 114 mit ihren Haltezapfen 132 voran von unten in die Stützabschnitte 104 eingesteckt, wobei die Haltezapfen 132 so gedreht werden, daß ihre Durchgangsbohrungen 148 mit den Durchtrittsöffnungen 146 und 112 fluchten.

Abschließend werden die Tragrollen 114 durch Eindrehen der Befestigungsschrauben 154 in die Innengewinde 150 der Durchgangsbohrungen 148 an dem jeweils zugeordneten Stützabschnitt 104 gesichert, wodurch auch die auf den jeweiligen Stützabschnitt 104 aufgefädelten Aufnahmehülsen 122 und Distanzelemente 126 gegen eine axiale Bewegung relativ zu dem Stützabschnitt 104 gesichert werden.

Damit ist die Montage des Servierwagens 100 abgeschlossen.

Zum Zerlegen des Servierwagens 100 müssen lediglich die Befestigungsschrauben 154 aus den Innengewinden 150 herausgedreht und aus den Durchtrittsöffnungen 112 der Stützabschnitte 104 entnommen werden.

Anschließend können zuerst die Tragrollen 114 aus dem jeweiligen Stützabschnitt 104 herausgezogen und anschließend die auf die Stützabschnitte 104 aufgefädelten Auflageborde 116 und Distanzelemente 126 von den Stützabschnitten 104 der Bügel 102 abgezogen werden.

Nach der auf diese Weise erfolgten Demontage des Servierwagens 100 können die Einzelteile des Servierwagens 100 in platzsparender Weise verpackt und transportiert werden.

## Patentansprüche

1. Transportwagen, insbesondere Servierwagen, umfassend einen ersten Bügel (102) und einen zweiten Bügel (102) und mindestens ein Bord (116), durch welches die beiden Bügel (102) miteinander verbunden sind,
wobei mindestens ein Bord (116) des Transportwagens (100) mindestens eine erste Aufnahme (122) für den ersten Bügel (102) und mindestens eine zweite Aufnahme (122) für den zweiten Bügel (102) aufweist und im montierten Zustand des Transportwagens (100) der erste Bügel (102) sich durch die erste Aufnahme (122) und der zweite Bügel (102) sich durch die zweite Aufnahme (122) des Bords (116) hindurch erstreckt und
wobei mindestens einer der Bügel (102) zwei Stützabschnitte (104), die sich jeweils durch mindestens eine Aufnahme (122) mindestens eines Bordes (116) hindurch erstrecken, und einen Griffabschnitt (106), der die beiden Stützabschnitte (104) miteinander verbindet, umfasst,
**dadurch gekennzeichnet,**
**dass** jede der Aufnahmen (122) an das jeweilige Bord (116) angeschweißt ist,
**dass** der Griffabschnitt (106) einen größeren Außendurchmesser aufweist als die Stützabschnitte (104) und
**dass** der Außendurchmesser des Griffabschnitts (106) im Wesentlichen dem Außendurchmesser einer Aufnahme (122) an einem der Borde (116) des Transportwagens (100) entspricht.

2. Transportwagen nach Anspruch 1, **dadurch gekennzeichnet, dass** mindestens eine der Aufnahmen (122) an dem Bord (116) eine Hülse umfasst, die einen Aufnahmekanal für einen der Bügel (102) ringförmig umgibt.

3. Transportwagen nach einem der Ansprüche 1 oder 2, **dadurch gekennzeichnet, dass** mindestens eine der Aufnahmen (122) an dem Bord (116) ein Aufnahmerohr umfasst.

4. Transportwagen nach einem der Ansprüche 1 bis 3, **dadurch gekennzeichnet, dass** die Innenkontur mindestens einer der Aufnahmen (122) der Außenkontur des sich im montierten Zustand des Transportwagens (100) durch die Aufnahme (122) hindurch erstreckenden Bereichs des Bügels (102) entspricht.

5. Transportwagen nach einem der Ansprüche 1 bis 4, **dadurch gekennzeichnet, dass** im montierten Zustand des Transportwagens (100) mindestens einer der Bügel (102) mit einem Bereich seiner Außenseite flächig an der Innenseite mindestens einer der Aufnahmen (122) anliegt.

6. Transportwagen nach einem der Ansprüche 1 bis 5, **dadurch gekennzeichnet, dass** mindestens ein Bord (116) des Transportwagens (100) mindestens zwei Aufnahmen (122) für denselben Bügel (102) aufweist.

7. Transportwagen nach einem der Ansprüche 1 bis 6, **dadurch gekennzeichnet, dass** mindestens ein Bord (116) des Transportwagens (100) mindestens zwei Aufnahmen (122) für den ersten Bügel (102) und mindestens zwei Aufnahmen (122) für den zweiten Bügel (102) aufweist.

8. Transportwagen nach einem der Ansprüche 1 bis 7, **dadurch gekennzeichnet, dass** der Transportwagen (100) mindestens zwei, vorzugsweise mindestens drei, Borde (116) umfasst.

9. Transportwagen nach einem der Ansprüche 1 bis 8, **dadurch gekennzeichnet, dass** mindestens eine Aufnahme (122) mindestens eines Bordes (116) zur Montage des Transportwagens (100) auf einen der Bügel (102) aufschiebbar und zur Demontage des Transportwagens (100) von dem Bügel (102) abziehbar ist.

10. Transportwagen nach einem der Ansprüche 1 bis 9, **dadurch gekennzeichnet, dass** zwischen mindestens einer Aufnahme (122) eines ersten Bords (116a) für einen der Bügel (102) und mindestens einer Aufnahme (122) eines zweiten Bords (116b) für denselben Bügel (102) mindestens ein Distanzelement (126) angeordnet ist, durch welches sich der betreffende Bügel (102) hindurch erstreckt.

11. Transportwagen nach Anspruch 10, **dadurch gekennzeichnet, dass** das Distanzelement (126) eine Distanzhülse oder ein Distanzrohr umfasst.

12. Transportwagen nach einem der Ansprüche 10 oder 11, **dadurch gekennzeichnet, dass** die Aufnahme (122) des ersten Bords (116) und die Aufnahme (122) des zweiten Bords (116) an einander gegenüberliegenden Enden des Distanzelements (126) anliegen.

13. Transportwagen nach einem der Ansprüche 10 bis 12, **dadurch gekennzeichnet, dass** zwischen sämtlichen Aufnahmen (122) für Bügel (102) des ersten Bords (116) und sämtlichen Aufnahmen (122) für Bügel (102) des zweiten Bords (116) jeweils mindestens ein Distanzelement (126) angeordnet ist.

14. Transportwagen nach einem der Ansprüche 10 bis 13, **dadurch gekennzeichnet, dass** mindestens eines der Distanzelemente (126) zur Montage des Transportwagens (100) auf einen der Bügel (102) aufschiebbar und zur Demontage des Transportwagens (100) von dem Bügel (102) abziehbar ist.

15. Transportwagen nach einem der Ansprüche 1 bis 14, **dadurch gekennzeichnet, dass** mindestens einer der Bügel (102) an einem unteren Ende mit einer Tragrolle (114) verbunden ist.

16. Transportwagen nach Anspruch 15, **dadurch gekennzeichnet, dass** die Tragrolle (114) ein Halteelement (132) umfasst, das sich in den Bügel (102) hinein erstreckt und/oder auf den Bügel (102) aufgeschoben ist.

17. Transportwagen nach Anspruch 16, **dadurch gekennzeichnet, dass** das Halteelement (132) der Tragrolle (114) an dem Bügel (102) mittels eines Befestigungsmittels, vorzugsweise mittels einer Befestigungsschraube (154), gesichert ist.

18. Transportwagen nach einem der Ansprüche 1 bis 17, **dadurch gekennzeichnet, dass** mindestens einer der Bügel (102) im Wesentlichen U-förmig ausgebildet ist.

19. Transportwagen nach einem der Ansprüche 1 bis 18, **dadurch gekennzeichnet, dass** der Griffabschnitt (106) und die beiden Stützabschnitte (104) einstückig miteinander ausgebildet sind.

20. Transportwagen nach einem der Ansprüche 1 bis 19, **dadurch gekennzeichnet, dass** der Griffabschnitt (106) und die beiden Stützabschnitte (104) miteinander verschweißt und/oder verklebt sind.

21. Transportwagen nach einem der Ansprüche 1 bis 20, **dadurch gekennzeichnet, dass** die beiden Bügel (102) des Transportwagens (100) ausschließlich durch das Bord (116) beziehungsweise ausschließlich durch die Borde (116) miteinander verbunden sind.

## Claims

1. A transport trolley, in particular a serving trolley, comprising a first frame (102) and a second frame (102) and at least one shelf (116) by means of which the two frames (102) are connected together,
wherein at least one shelf (116) of the transport trolley (100) comprises at least one first seating (122) for the first frame (102) and at least one second seating (122) for the second frame (102), and the first frame (102) extends through the first seating (122) and the second frame (102) extends through the second seating (122) of the shelf (116) in the assembled state of the transport trolley (100) and wherein at least one of the frames (102) comprises two supporting sections (104) which extend through at least one seating (122) of at least one shelf (116), and a handle section (106) which connects the two supporting sections (104) together,
**characterized**
**in that** each of the seatings (122) is welded to the respective shelf (116),
**in that** the handle section (106) has a larger external diameter than the supporting sections (104) and
**in that** the external diameter of the handle section (106) substantially corresponds to the external diameter of a seating (122) on one of the shelves (116) of the transport trolley (100).

2. A transport trolley in accordance with Claim 1, **characterized in that** at least one of the seatings (122) on the shelf (116) comprises a sleeve which surrounds a seating channel for one of the frames (102) in ring-like manner.

3. A transport trolley in accordance with either of the Claims 1 or 2, **characterized in that** at least one of the seatings (122) on the shelf (116) comprises a seating tube.

4. A transport trolley in accordance with any of the Claims 1 to 3, **characterized in that** the internal contour of at least one of the seatings (122) corresponds to the external contour of the region of the frame (102) extending through the seating (122) in the assembled state of the transport trolley (100).

5. A transport trolley in accordance with any of the Claims 1 to 4, **characterized in that** a region of the outer surface of at least one of the frames (102) abuts against the inner surface of at least one of the seatings (122) in the assembled state of the transport trolley (100).

6. A transport trolley in accordance with any of the Claims 1 to 5, **characterized in that** at least one shelf (116) of the transport trolley (100) has at least two seatings (122) for the same frame (102).

7. A transport trolley in accordance with any of the Claims 1 to 6, **characterized in that** at least one shelf (116) of the transport trolley (100) has at least two seatings (122) for the first frame (102) and at least two seatings (122) for the second frame (102).

8. A transport trolley in accordance with any of the Claims 1 to 7, **characterized in that** the transport trolley (100) comprises at least two, and preferably at least three, shelves (116).

9. A transport trolley in accordance with any of the Claims 1 to 8, **characterized in that** at least one seating (122) of at least one shelf (116) is arranged to be pushed onto one of the frames (102) for the purposes of assembling the transport trolley (100) and to be pulled off the frame (102) for the disassembly of the transport trolley (100).

10. A transport trolley in accordance with any of the Claims 1 to 9, **characterized in that** at least one spacer element (126) through which the corresponding frame (102) extends is arranged between at least one seating (122) of a first shelf (116a) for one of the frames (102) and at least one seating (122) of a second shelf (116b) for the same frame (102).

11. A transport trolley in accordance with Claim 10, **characterized in that** the spacer element (126) comprises a spacing sleeve or a spacing tube.

12. A transport trolley in accordance with either of the Claims 10 or 11, **characterized in that** the seating (122) of the first shelf (116) and the seating (122) of the second shelf (116) abut mutually opposite ends of the spacer element (126).

13. A transport trolley in accordance with any of the Claims 10 to 12, **characterized in that** at least one respective spacer element (126) is arranged between all the seatings (122) for frames (102) of the first shelf (116) and all the seatings (122) for frames (102) of the second shelf (116).

14. A transport trolley in accordance with any of the Claims 10 to 13, **characterized in that** at least one of the spacer elements (126) is arranged to be pushed onto one of the frames (102) for the purposes of assembling the transport trolley (100) and to be pulled off the frame (102) for the disassembly of the transport trolley (100).

15. A transport trolley in accordance with any of the Claims 1 to 14, **characterized in that** at least one of the frames (102) is connected to a castor (114) at the lower end thereof.

16. A transport trolley in accordance with Claim 15, **characterized in that** the castor (114) comprises a retaining element (132) which extends into the frame (102) and/or is pushed onto the frame (102).

17. A transport trolley in accordance with Claim 16, **characterized in that** the retaining element (132) of the castor (114) is secured to the frame (102) by means of a fixing device, preferably by means of a fixing screw member (154).

18. A transport trolley in accordance with any of the Claims 1 to 17, **characterized in that** at least one of the frames (102) is substantially U-shaped.

19. A transport trolley in accordance with any of the Claims 1 to 18, **characterized in that** the handle section (106) and the two supporting sections (104) are formed together in one-piece manner.

20. A transport trolley in accordance with any of the Claims 1 to 19, **characterized in that** the handle section (106) and the two supporting sections (104) are welded and/or adhered to one another.

21. A transport trolley in accordance with any of the Claims 1 to 20, **characterized in that** the two frames (102) of the transport trolley (100) are connected together exclusively by the shelf (116) or exclusively by the shelves (116).

## Revendications

1. Chariot de transport, en particulier desserte, comprenant un premier étrier (102) et un deuxième étrier (102) et au moins un plateau (116), par lequel les deux étriers (102) sont reliés entre eux,
au moins un plateau (116) du chariot de transport (100) présentant au moins un premier logement (122) pour le premier étrier (102) et au moins un deuxième logement (122) pour le deuxième étrier (102) et, à l'état monté du chariot de transport (100), le premier étrier (102) s'étend à travers le premier logement (122), le deuxième étrier (102) s'étend à travers le deuxième logement (122) du plateau (116) et
au moins l'un des étriers (102) comprend deux sections d'appui (104) qui s'étendent chacune à travers au moins un logement (122) d'au moins un plateau (116) et une section de poignée (106) qui relie les deux sections d'appui (104) entre elles,
**caractérisé en ce que**
chacun des logements (122) est soudé sur le plateau correspondant (116),
que la section de poignée (106) présente un diamètre extérieur plus grand que la section d'appui (104) et
que le diamètre extérieur de la section de poignée (106) correspond essentiellement au diamètre extérieur d'un logement (122) sur l'un des plateaux (116) du chariot de transport (100).

2. Chariot de transport selon la revendication 1, **caractérisé en ce que** au moins l'un des logements (122) comprend sur le plateau (116) une enveloppe qui entoure circulairement un canal de logement pour l'un des étriers (102).

3. Chariot de transport selon l'une des revendications 1 ou 2, **caractérisé en ce que** au moins l'un des logements (122) inclut un tube de logement sur le plateau (116).

4. Chariot de transport selon l'une des revendications 1 à 3, **caractérisé en ce que** le contour intérieur d'au moins un des logements (122) correspond au contour extérieur de la zone de l'étrier (102) qui s'étend à travers le logement (122) à l'état monté du chariot de transport (100).

5. Chariot de transport selon l'une des revendications 1 à 4, **caractérisé en ce que** à l'état monté du chariot de transport (100) au moins l'un des étriers (102) est posé à plat sur la face intérieure d'au moins un des logements (122) avec une zone de sa face extérieure.

6. Chariot de transport selon l'une des revendications 1 à 5, **caractérisé en ce que** au moins un plateau (116) du chariot de transport (100) présente au moins deux logements (122) pour le même étrier (102).

7. Chariot de transport selon l'une des revendications 1 à 6, **caractérisé en ce que** au moins un plateau (116) du chariot de transport (100) présente au moins deux logements (122) pour le premier étrier (102) et au moins deux logements (122) pour le deuxième étrier (102).

8. Chariot de transport selon l'une des revendications 1 à 7, **caractérisé en ce que** le chariot de transport (100) présente au moins deux plateaux, de préférence au moins trois plateaux (116).

9. Chariot de transport selon l'une des revendications 1 à 8, **caractérisé en ce que** au moins un logement (122) d'au moins un plateau (116) peut être coulissé sur l'un des étriers (102) pour le montage du chariot de transport (100) et peut être extrait de l'étrier (102) pour le démontage du chariot de transport (100).

10. Chariot de transport selon l'une des revendications 1 à 9, **caractérisé en ce que**, entre au moins un logement (122) d'un premier plateau (116a) pour l'un des étriers (102), et au moins un logement (122) d'un deuxième plateau (116b) pour le même étrier (102), au moins un élément d'écartement (126) est disposé qui est traversé par l'étrier correspondant (102).

11. Chariot de transport selon la revendication 10, **caractérisé en ce que** l'élément d'écartement(126) comprend une douille d'écartement ou un tube d'écartement.

12. Chariot de transport selon l'une des revendications 10 ou 11, **caractérisé en ce que** le logement (122) du premier plateau (116) et le logement (122) du deuxième plateau (116) se trouvent à des distances opposées de l'élément d'écartement (126).

13. Chariot de transport selon l'une des revendications 10 à 12, **caractérisé en ce que**, entre tous les logements (122) pour l'étrier (102) du deuxième plateau (116) et tous les logements (122) pour l'étrier (102) du deuxième plateau (116), au moins un élément d'écartement (126) est disposé.

14. Chariot de transport selon l'une des revendications 10 à 13, **caractérisé en ce que** au moins un des éléments d'écartement (126) pour le montage du chariot de transport (100) peut être coulissé sur l'un des étriers (102) et peut être extrait de l'étrier (102) pour le démontage du chariot de transport (100).

15. Chariot de transport selon l'une des revendications 1 à 4, **caractérisé en ce que** au moins un des étriers (102) est relié à une extrémité inférieure à un galet porteur (114).

16. Chariot de transport selon la revendication 15, **caractérisé en ce que** le galet porteur (114) comprend un élément d'arrêt (132) qui s'étend dans l'étrier (102) et/ou est coulissé sur l'étrier (102).

17. Chariot de transport selon la revendication 16, **caractérisé en ce que** l'élément d'arrêt (132) du galet porteur (114) est calé sur l'étrier (102) au moyen d'un élément de fixation, de préférence au moyen d'une vis de fixation (154).

18. Chariot de transport selon l'une des revendications 1 à 17, **caractérisé en ce que** au moins l'un des étriers (102) a une forme essentiellement en U.

19. Chariot de transport selon l'une des revendications 1 à 18, **caractérisé en ce que** la section de poignée (106) et les deux sections d'appui (104) sont d'un seul tenant.

20. Chariot de transport selon l'une des revendications 1 à 19, **caractérisé en ce que** la section de poignée (106) et les deux sections d'appui (104) sont réunies par soudage et/ou par collage.

21. Chariot de transport selon l'une des revendications 1 à 20, **caractérisé en ce que** les deux étriers (102) du chariot de transport (100) sont reliés l'un à l'autre exclusivement par le plateau (116), respectivement exclusivement par les plateaux (116).
